# EUROPEAN PATENT SPECIFICATION

(11) **EP 2 063 583 B1**
(45) Date of publication and mention of the grant of the patent: **03.02.2010**
(21) Application number: 07291379.1
(22) Date of filing: 20.11.2007
(51) Int. Cl.: H04L 12/56

(54) **Client traffic protection mechanism for a packet-switched network**
Client-Verkehrsschutzmechanismus für ein paketgeschaltetes Netzwerk
Mécanisme de protection du trafic client pour un réseau à commutation par paquets

(43) Date of publication of application: 27.05.2009
(73) Proprietor: Alcatel Lucent, 75008 Paris (FR)
(72) Inventor: Torassa, Sergio, 17019 Varazze (Savona) (IT); Costantini, Carlo, 22064 Casatenovo (Lecco) (IT); Avitabile, Marco, 16128 Genova (IT)
(74) Representative: Schmidt, Werner Karl

(56) References cited:
- WO-A-03/021858
- US-A1- 2007 104 189

## Description

### Field of the invention

The present invention generally relates to the field of telecommunication networks. In particular, the present invention relates to a network node implementing a client traffic protection mechanism in a packet-switched network supporting transmission of a client traffic generated by a client network. Further, the present invention relates to a method of protecting a client traffic generated by a client network and transported by a packet-switched network.

### Background art

It is known that a packet-switched network transports traffic in form of packets. Typically, each packet has a payload comprising a portion of the traffic to be transported and a header comprising information allowing the packet-switched network to route the packet towards a destination node.

A packet-switched network may be used for transporting client traffic, i.e. traffic exchanged by client networks (which may be either packet-switched networks or circuit-switched networks) connected to the packet-switched network by means of respective interface nodes.

For instance, it is assumed that a first client network connected to a packet-switched network by means of a first interface node wishes to transmit a client traffic to a second client network connected to the packet-switched network by means of a second interface node. Under this assumption, the client traffic transmitted by the first client network is received at the first interface node, which processes it and transmits it in form of packets to the second interface node through the packet-switched network. The second interface node then forwards the client traffic to the second client network.

In particular, the first interface node typically has a client card connecting the first interface node to the first client network, a number of line cards connecting the first interface node with respective nodes of the packet-switched network, and a switch card connecting the client card with the line cards. The client card typically has a forwarding table. The forwarding table has a plurality of rows, each row including a destination address and an identifier of a line card associated to the destination address.

When the first interface node receives the client traffic through the client card, the client card determines the line card through which packets transporting the client traffic have to be forwarded by using the destination address of the packets as search key in the forwarding table.

A packet-switched network supporting transmission of client traffic may implement a client traffic protection mechanism. According to such a mechanism, the packet-switched network is suitable to route packets according to a first path (working path) when the packet-switched network is normally operating, and to reroute packets according to a second path (protection path) if a failure affecting the working path occurs in the packet-switch network. Accordingly, during normal operation, the first interface node forwards packets through a working line card (i.e. a line card corresponding to the working path). If a failure affecting the working path occurs in the packet-switched network, a signaling message indicative of the failure is received by the first interface node, which processes it and then reroutes the packets, i.e. it starts forwarding the packets through a protection line card (i.e. a line card corresponding to the protection path). In this way, packets may bypass the failure and reach the second interface node. The working path and the protection path may also be terminated on different interfaces of a same working line card. However, this disadvantageously does not allow to protect traffic against possible failures of the working line card.

A first known solution allowing the first interface node to reroute packets consists in recalculating the forwarding table when the first interface node receives a signaling message indicative of a failure occurred in the packet-switched network. Recalculation of the forwarding table consists in determining, for each destination address, whether the associated identifier of the working line card has to be replaced with the identifier of the protection line card.

A second known solution allowing the first interface node to reroute packets consists in continuing to forward packets to the working line card even after having received the signaling message indicative of the failure. According to the content of the signaling message, the working line card decides whether to directly forward the packets along the working path, or to redirect the packets along the protection path through the protection line card.

US 2007/104189 discloses a network system comprising a client device, a central office, and a network device connected to the client and the central office. The network device includes a first control card, a second control card, and a plurality of line cards connected to the first control card, the second control card, and the client. Connections between the first control card and one part of the line cards are designated as primary connections, and connections between the second control card and the same part of the line cards are designated as redundant connections. Meanwhile, connections between the second control card and a remaining part of the line cards are designated as primary connections, and connections between the first control card and the remaining part of the line cards are designated as redundant connections.

### Summary of the invention

The Applicant has noticed that the above solutions has some drawbacks.
As to the first solution, according to client traffic protection mechanisms, in case of a failure the client traffic has to be restored within a predefined maximum time, which typically is of some tens of milliseconds (e.g. 50 ms). However, recalculation of the forwarding table is a very long and complex operation, since a forwarding table may comprise a very high number of rows (such as some tens of thousands). Therefore, the first solution disadvantageously may not allow to restore the client traffic within the predefined maximum time.

As to the second solution, it disadvantageously requires to increase complexity of the line cards. Indeed, when a line card is a working line card, it has to process possible signaling messages indicative of failures and decide whether to redirect packets to a protection line card. Further, additional connections have to be provided between the line cards, thus increasing complexity of the overall interface node. Besides, this second solution does not allow to protect traffic against possible failures of the working line card.

Accordingly, the Applicant has tackled the problem of providing a network node implementing a client traffic protection mechanism which allows to overcome the aforesaid drawbacks, i.e. which allows to restore the client traffic within the predefined maximum time, without increasing complexity of the lines cards and without the need to provide additional connections between line cards.

### Brief description of the drawings

The present invention will become clearer by reading the following detailed description, given by way of example and not of limitation, to be read with reference to the accompanying drawings wherein:
- Figures 1a and 1b show a first exemplary packet-switched network during normal operation and when a failure occurs, respectively;
- Figure 2 shows in further detail the structure of an interface node of the packet-switched network of Figure 1;
- Figure 3 shows a logical forwarding table according to a first embodiment of the present invention;
- Figures 4a and 4b show a physical selection table during normal operation and when the first failure occurs, respectively, according to a first embodiment of the present invention;
- Figures 5a and 5b show a second exemplary packet-switched network during normal operation and when a failure occurs, respectively;
- Figure 6 shows a logical forwarding table according to a second embodiment of the present invention; and
- Figures 7a and 7b show a physical selection table during normal operation and when the second failure occurs, respectively, according to a second embodiment of the present invention.

### Detailed description of preferred embodiments of the invention

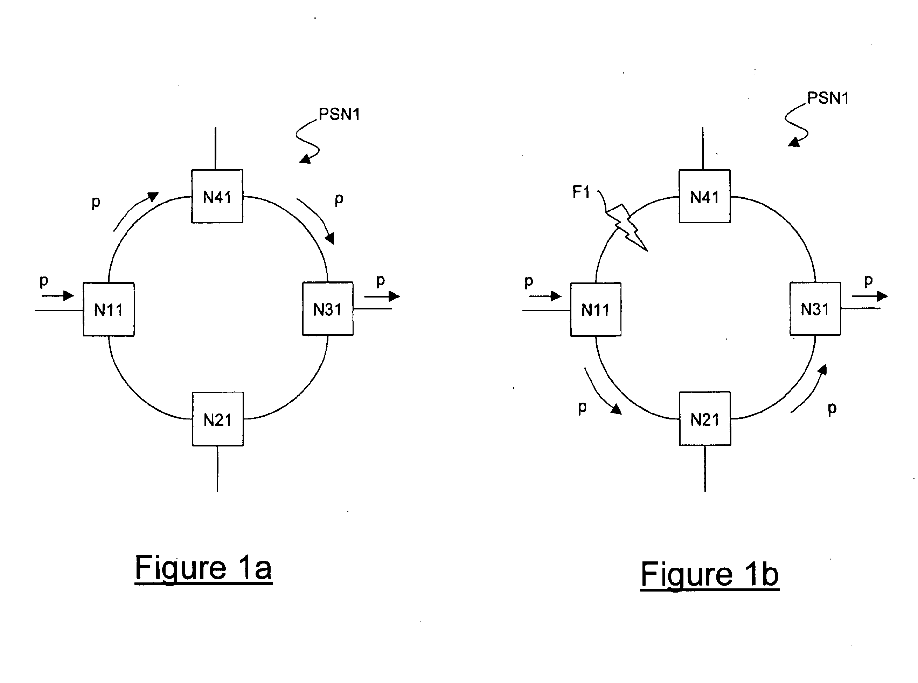

Figures 1a and 1b schematically show a first exemplary packet-switched network PSN1.

The network PSN1 has four nodes N11, N21, N31 and N41 arranged according to a ring topology. Although in Figures 1a and 1b the nodes N11, N21, N31 and N41 are represented as adjacent nodes, the network PSN1 may comprise other nodes placed on the links between the nodes N11, N21, N31 and N41, which are not shown in Figures 1a and 1b since they are not relevant to the present description.

Herein after, it is assumed that nodes N11 and N31 are interface nodes. Each interface node N11 and N31 is suitable to connect the packet-switched network PSN1 with a respective client network. For clarity of the drawings, the client networks are not shown in Figures 1a and 1b.

Herein after, it is assumed that the packet-switched network PSN1 is configured to receive packets p through the interface node N11 and to output such packets p through the interface node N31.

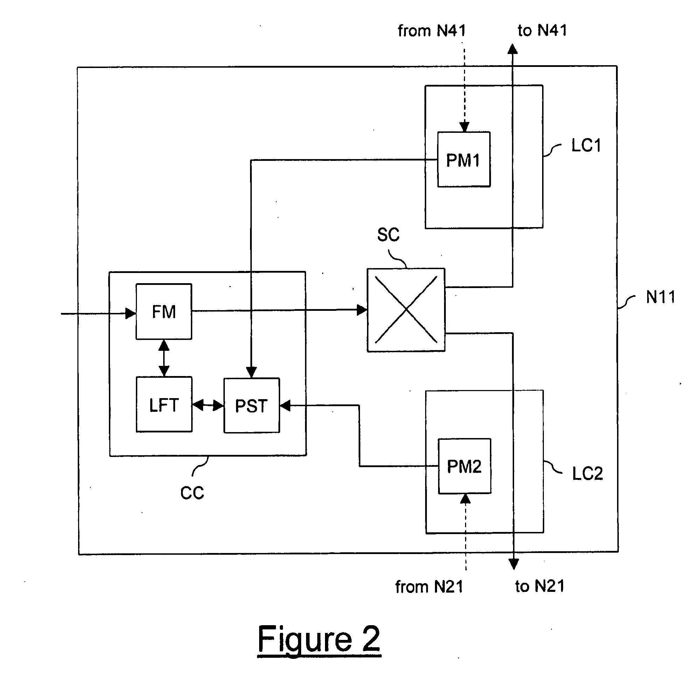

By referring to Figure 2, the structure and operation of the interface node N11 will be described in detail. In the following description, only client traffic transmitted from the interface node N11 to the interface nodes N31 will be considered. However, also the interface node N31 may transmit client traffic to the interface node N11. Accordingly, even if herein after only a description of the interface node N11 will be provided, the same description could also apply to the interface node N31.

Preferably, the interface node N11 comprises a client card CC, a first line card LC1, a second line card LC1 and a switch card SC connecting the client card CC to the first line card LC1 and to the second line card LC2.

Preferably, the client card CC is configured to receive the packets p, to process them and to forward them through the switch card SC either to the first line card LC1 or to the second line card LC1, as it will be described in further detail herein after. The first line card LC1 is then configured to forward packets p received from the client card CC through the switch card SC to the node N41 (possibly through other nodes, which are not shown in Figures 1a and 1b). Similarly, the second line card LC2 is configured to forward packets p received from the client card CC through the switch card SC to the node N21 (possibly through other nodes, which are not shown in Figures 1a and 1b).

More particularly, the client card CC preferably comprises a forwarding module FM, a logical forwarding table LFT and a physical selection table PST. Further, preferably, the first line card LC1 comprises a first client traffic protection module PM1, while the second line card LC2 comprises a second client traffic protection module PM2. The client card CC and the line cards LC1 and LC2 may comprise other modules, which are not shown in Figure 2 since they are not relevant to the present description.

The forwarding module FM has an input substantially corresponding to the input of the interface node N11 and an output connected to the switch card SC. Further, the forwarding module FM cooperates with the logical forwarding table LFT and, by means of the logical forwarding table LFT, with the physical selection table PST, as it will be described in further detail herein after.

The first client traffic protection module PM1 of the first line card LC1 and the second client traffic protection module PM2 of the second line card LC2 are both connected to the physical selection table PST.

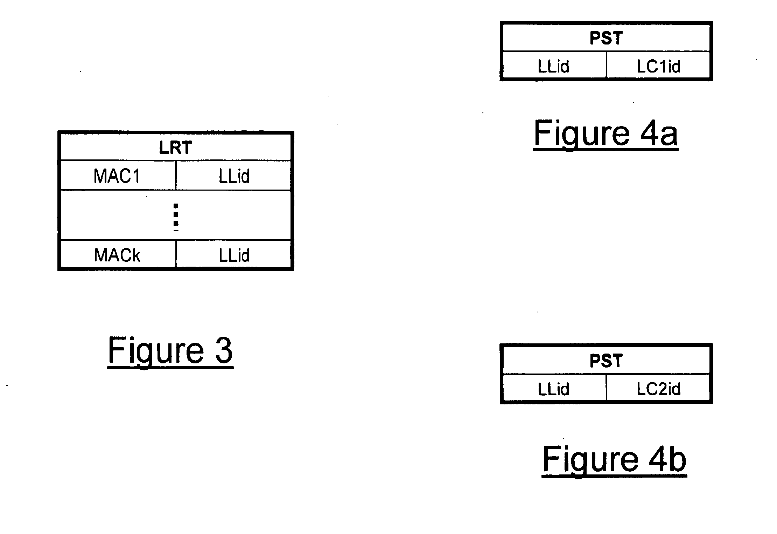

Figure 3 shows in detail the logical forwarding table LFT, according to a first embodiment of the present invention.

The logical forwarding table LFT preferably comprises a number of rows equal to the overall number of destination addresses of the packets p. In the following, it is assumed that each packet p has a destination address selected from a set of k destination addresses MAC1, ..., MACk. Accordingly, the logical forwarding table LFT preferably has k rows.

Each row of the logical forwarding table LFT preferably comprises a destination address MAC1, ..., MACk and a logical line identifier associated to the destination address MAC1, ..., MACk.

Preferably, the logical line identifier associated to each destination address MAC1, ..., MACk is calculated by the forwarding module FM by means of a learning function. According to such a learning function, when the client card CC receives a packet p, it preferably determines the line card through which packets having a source address equal to the destination address of the received packet p are being received. Then, preferably, the forwarding module FM preferably associates a same logical line identifier to destination addresses such that packets having source addresses equal to such destination addresses are being received through a same line card.

Therefore, by assuming that the interface node N 11 receives packets with source addresses equal to any of the destination addresses MAC1, ..., MACk through the same line card (which is assumed to be the first line card LC1), the forwarding module FM preferably associates to all the destination addresses MAC1, ..., MACk a same logical line identifier LLid, as shown in Figure 3.

Figures 4a and 4b show the physical selection table PST according to a first embodiment of the present invention.

Preferably, the physical selection table PST comprises a number of rows equal to the number of different logical line identifies included in the logical forwarding table LFT. Since the logical forwarding table LFT of Figure 3 comprises a single logical line identifier LLid, the physical selection table PST preferably comprises a single row. In the row, the physical selection table PST preferably comprises the logical line identifier LLid and a line card identifier associated to the logical line identifier.

Preferably, the line card identifier is determined either by the first client traffic protection module PM1 of the first line card LC1 or by the second client traffic protection module PM2 of the second line card LC2, according to the fact that the working path along which packets with destination addresses having associated the logical line identifier LLid is affected by a failure or not.

In particular, during normal operation of the packet-switched network PSN1, the line card identifier associated to the logical line identifier LLid is set equal to the identifier of the line card corresponding to the working path. Otherwise, in case of failure affecting the working path, the line card identifier associated to the logical line identifier LLid is set equal to the identifier of the line card corresponding to the protection path.

Figure 1a shows the working path for packets p during normal operation of the packet-switched network PSN1. In this situation, packets p are forwarded by the interface node N11 to the node N41, which forwards them to the interface node N31.

Accordingly, during normal operation the protection modules PM1, PM2 set the line card identifier associated to the logical line identifier LLid equal to the identifier LC1id of the first line card LC1, which is the line card corresponding to the working path for the packets p, as shown in Figure 4a.

Therefore, when the interface node N11 receives a packet p, the forwarding module FM preferably reads the destination address of the received packets p and uses it as search key in the logical forwarding table LFT for retrieving the logical line identifier LLid associated to the destination address. Then, the logical line identifier LLid is used as search key in the physical selection table PST for retrieving the line card identifier LCid1 associated to the logical line identifier LLid. The forwarding module FM finally instructs the switch card SC to forward the received packet p through the line card identified by the retrieved line card identifier, i.e. the first line card LC1.

Figure 1b shows the protection path which is activated for the packets p when a failure F1 occurs between the interface node N11 and the node N41, thus affecting the working path of the packets p. In this situation, packets p are forwarded by the interface node N11 to the node N21, which forwards them to the interface node N31.

Accordingly, when the failure F1 occurs, the first line card LC1 of the interface node N11 preferably receives a signaling message indicative of the failure F1. The first client traffic protection module PM1 of the first line card LC1 preferably processes such a signaling message, and it determines to change the line card identifier associated to the logical line identifier LLid in the physical selection table PST, by replacing the identifier LC1 id of the first line card LC1 with the identifier LC2id of the second line card LC2, which is the line card corresponding to the protection path. The recalculated physical selection table PST is shown in Figure 4b.

Therefore, when the interface node N11 receives a packet p, the forwarding module FM preferably reads the destination address of the received packet and uses it as search key in the logical forwarding table LFT for retrieving the logical line identifier LLid associated to the destination address. Then, the logical line identifier LLid is used as search key in the physical selection table PST for retrieving the line card identifier LCid2 associated to the logical line identifier LLid. The forwarding module FM finally instructs the switch card SC to forward the received packet p through the line card identified by the retrieved line card identifier, which is now the second line card LC2.

Therefore, advantageously, thanks to the combination of the logical forwarding table LFT and the physical selection table PST, packets may be rerouted in a very short time.

Indeed, when a failure occurs in the packet-switched network affecting the working path, only the physical selection table PST has to be recalculated, without the need of modifying the logical forwarding table LFT. This operation is particularly simple and fast, since the physical selection table PST has a much lower number of rows than the logical forwarding table LFT. Packets may then be advantageously rerouted (i.e. the client traffic may be restored) within the predefined maximum time provided for client traffic protection mechanisms.

Further, advantageously, the structure of the line cards is very simple, and there is no need to provide additional connections between the first line card and the second line card.

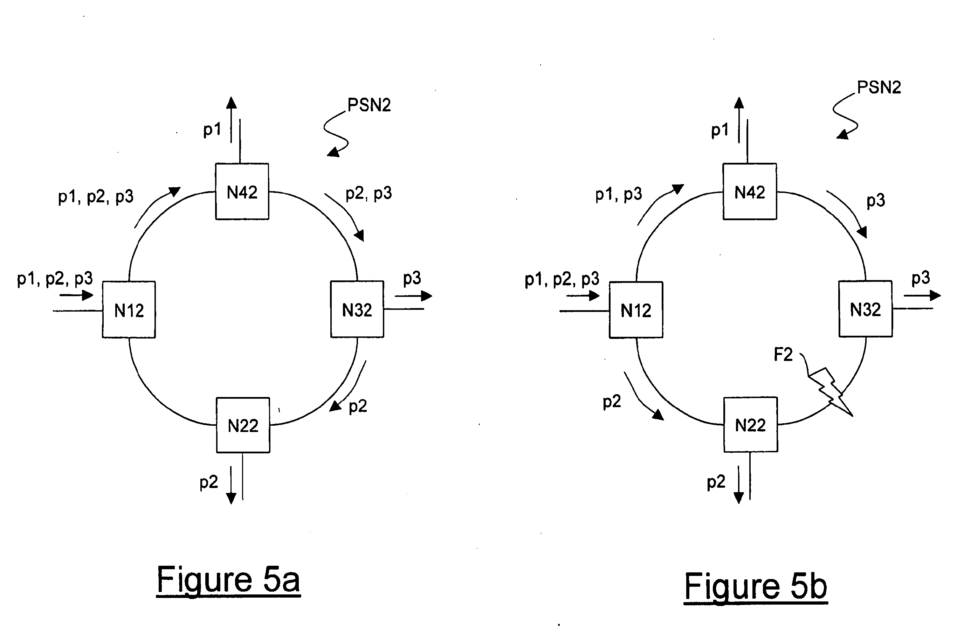

Figures 5a and 5b schematically show a second exemplary packet-switched network PSN2. The packet-switched network PSN2 is a ring network.

The network PSN2 has four interface nodes N12, N22, N32 and N42. Although in Figures 5a and 5b the interface nodes N12, N22, N32 and N42 are represented as adjacent nodes, the network PSN2 may comprise other nodes placed on the links between the interface nodes N12, N22, N32 and N42, which are not shown in Figures 5a and 5b since they are not relevant to the present description.

Each interface node N12, N22, N32 and N42 is suitable to connect the packet-switched network PSN2 with a respective client network. For clarity of the drawings, the client networks are not shown in Figures 5a and 5b.

Herein after, it is assumed that the interface node N12 receives packets p1, p2 and p3 from the client network connected to it.

Further, it is assumed that each packet p1 has a destination address selected from a first set of n destination addresses MAC0, ... MACn-1. Preferably, the n destination addresses MAC0, ... MACn-1 are such that packets p1 received by the interface node N12 are to be transmitted to the client network connected to the packet-switched network PSN2 through the interface node N42. Further, it is assumed that each packet p2 has a destination address selected from a second set of m destination addresses MACn, ... MACn+m-1. Preferably, the m destination addresses MACn, ... MACn+m-1 are such that packets p2 received by the interface node N12 are to be transmitted to the client network connected to the packet-switched network PSN2 through the interface node N22. Finally, it is assumed that each packet p3 has a destination address elected from a third set of q destination addresses MACn+m, ... MACn+m+q-1. Preferably, the q destination addresses MACn+m, ... MACn+m+q-1 are such that packets p3 received by the interface node N12 are to be transmitted to the client network connected to the packet-switched network PSN2 through the interface node N32.

The structure of the interface node N12 is substantially identical to the structure of the interface node N11 shown in Figure 2. Accordingly, a detailed description will not be repeated. Further, optionally, also the structure of the other interface nodes N22, N32 and N42 is substantially identical to the structure of the interface node N11 shown in Figure 2.

Differently from the interface node N11 of Figure 2, which comprises a logical forwarding table LFT and a physical selection table PST according to a first embodiment of the present invention, the interface node N12 preferably comprises a logical forwarding table LFT' and a physical selection table PST' according to a second embodiment of the present invention.

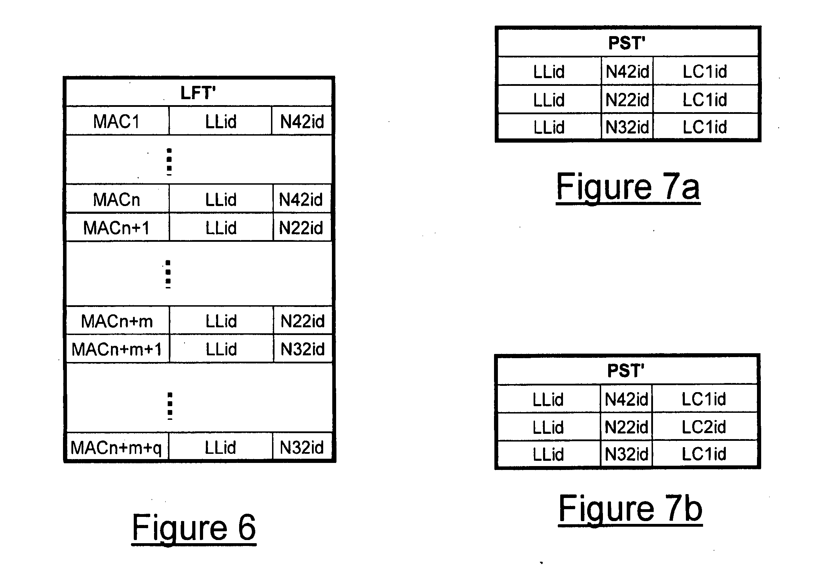

Figure 6 shows in detail the logical forwarding table LFT' according to the second embodiment of the present invention.

Similarly to the logical forwarding table LFT of Figure 3, also the logical forwarding table LFT' preferably comprises a number of rows equal to the overall number of destination addresses of the packets p1, p2, p3, which is now n+m+q. According to this second embodiment, each row of the logical forwarding table LFT' preferably comprises a destination address, a logical line identifier associated to the destination address and an output interface identifier associated to the destination address.

Preferably, the logical line identifier is calculated by the forwarding module FM as explained above by referring to Figure 3. Therefore, by assuming that the interface node N12 receives packets with source addresses equal to any of the destination addresses MAC0, ... MACn-1, MACn, ... MACn+m-1, MACn+m, ... MACn+m+q-1 through the same line card (which is assumed to be the first line card LC1), the forwarding module FM preferably associates to all the destination addresses MAC0, ... MACn-1, MACn, ... MACn+m-1, MACn+m, ... MACn+m+q-1 a same logical line identifier LLid, as shown in Figure 6.

Preferably, the output interface identifier associated to a destination address is the identifier of the interface node connecting the packet-switched network PSN2 and the client network to which the packet with such a destination address has to be transmitted.

Preferably, the output interface identifiers are calculated by an output interface determination function implemented by the forwarding module of the interface node of the ring through the packet exits PSN2 (e.g., N32 for p3).

In particular, the output interface determination function determines that packets p1, having destination addresses selected from a first set of n destination addresses MAC0, ... MACn-1, must be transmitted to the client network connected to the packet-switched network PSN2 by means of the interface node N42. Accordingly, the output interface determination function determines that the output interface identifier associated to the destination addresses MAC0, ... MACn-1 is the identifier N42id of the interface node N42. Similarly, the output interface determination function determines that packets p2, having destination addresses selected from a second set of m destination addresses MACn, ... MACn+m-1, must be transmitted to the client network connected to the packet-switched network PSN2 by means of the interface node N22. Accordingly, the output interface determination function determines that the output interface identifier associated to the destination addresses MACn, ... MACn+m-1 is the identifier N22id of the interface node N22. Similarly, the output interface determination function determines that packets p3, having destination addresses selected from a third set of q destination addresses MACn+m, ... MACn+m+q-1, must be transmitted to the client network connected to the packet-switched network PSN2 by means of the interface node N32. Accordingly, the output interface determination function determines that the output interface identifier associated to the destination addresses MACn+m, ... MACn+m+q-1 is the identifier N32id of the interface node N32.

Figures 7a and 7b show the physical selection table PST' according to the second embodiment of the present invention.

Preferably, the physical selection table PST' comprises a number of rows equal to the number of different logical line identifier-output interface identifier combinations included in the logical forwarding table LFT'. Since the logical forwarding table LFT' of Figure 6 comprises three different combinations of logical line identifier and output interface identifier (i.e. the combination LLid-N42id, the combination LLid-N22id, and the combination LLid-N32id), the physical selection table PST' preferably comprises three rows. In each row, the physical selection table PST' preferably comprises a logical line identifier-output interface identifier combination and a line card identifier associated to the combination.

Also according to this second embodiment, the line card identifier is preferably determined either by the first client traffic protection module PM1 of the first line card LC1 or by the second client traffic protection module PM2 of the second line card LC2, according to the fact that the working path along which packets with destination addresses having associated one of the logical line identifier-output interface identifier combinations is affected by a failure or not.

In particular, during normal operation of the packet-switched network PSN2, the line card identifier associated to each combination of a logical line identifier and an output interface identifier is set equal to the identifier of the line card corresponding to the working path for that combination. Otherwise, in case of failure affecting the working path, the line card identifier associated to each combination of logical line identifier and output interface identifier is set equal to the identifier of the line card corresponding to the protection path for that combination.

Figure 5a shows the working paths for packets p1, p2 and p3 during normal operation of the packet-switched network PSN2. In this situation, packets p1, p2 and p3 are forwarded by the interface node N12 to the interface node N42, which forwards the packets p1 to the respective client network (not shown in Figure 5a), while it forwards the packets p2 and p3 to the interface node N32. In turn, the interface node N32 forwards the packets p3 to the respective client network (not shown in Figure 5a), while it forwards the packets p2 to the interface node N22. Finally, the interface node N22 forwards the packets p2 to the respective client network (not shown in Figure 5a).

Accordingly, during normal operation the protection modules PM1, PM2 set the line card identifier associated to all the combinations LLid-N42id, LLid-N22id and LLid-N32id equal to the identifier LC1id of the first line card LC1, which is the line card corresponding to the working paths for all the packets p1, p2 and p3, as shown in Figure 6a.

Therefore, when the interface node N12 receives a packet p1, p2 or p3, the forwarding module FM preferably reads the destination address of the received packets and uses it as search key in the logical forwarding table LFT' for retrieving the combination of logical line identifier and output interface identifier associated to the destination address. Then, combination of logical line identifier and output interface identifier is used as search key in the physical selection table PST' for retrieving the line card identifier associated to the combination. The forwarding module FM finally instructs the switch card SC to forward the received packet p1, p2 or p3 through the line card identified by the retrieved line card identifier, i.e. the first line card LC1 for all the packets p1, p2 and p3.

Figure 5b shows the protection paths which are activated when a failure F2 occurs between the interface node N22 and the interface node N32. Only the working path of packets p2 is affected, while the working paths of packets p1 and p3 are not affected. Accordingly, packets p1 and p3 continue being forwarded according to the working paths shown in Figure 5a, while only packets p2 are forwarded by the interface node N12 to the interface node N22, which forwards the packets p2 to the respective client network (not shown in Figure 5b).

Accordingly, when the failure F2 occurs, the first line card LC1 of the interface node N12 preferably receives a signaling message indicative of the failure F2. The first client traffic protection module PM1 of the first line card LC1 preferably processes such a signaling message, and it determines to change the line card identifier associated to the combination LLid-N22id in the physical selection table PST' by replacing the identifier LC1id of the first line card LC1 with the identifier LC2id of the second line card LC2, which is the line card corresponding to the protection path for the packets p2. Besides, the line card identifiers associated to the other combinations LLid-N42id and LLid-N32id are unchanged. The recalculated physical selection table PST' is shown in Figure 7b.

Therefore, when the interface node N12 receives a packet p1 or p3, the operation of the forwarding module FM is still identical to the one during normal operation, which has been explained above by referring to Figure 5a.

Otherwise, when the interface node N12 receives a packet p2, the forwarding module FM preferably reads the destination address of the received packet p2 and uses it as search key in the logical forwarding table LFT' for retrieving the combination of logical line identifier and output interface identifier associated to the destination address, i.e. the combination LLid-N22id. Then, the combination LLid-N22id is used as search key in the physical selection table PST' for retrieving the line card identifier associated to the combination LLid-N22id, which is now LC2id. The forwarding module FM finally instructs the switch card SC to forward the received packets p2 through the line card identified by the retrieved line card identifier, i.e. the second line card LC2.

Therefore, also according to this second embodiment, the packets are rerouted (i.e. the client traffic is restore) in a very fast way, since only the physical selection table PST' has to be recalculated when a failure occurs in the packet-switched network PSN2.

The rerouting method according to embodiments of the present invention may also be advantageously applied to packets-switched network including a number of sub-networks, such as for instance a multi-ring RPR (Resilient Packet Ring) network. In this situation, the packet-switched network comprises a number of cascaded rings.

Each ring may be associated to a respective ring identifier. The logical routing table may then comprise, for each destination address, a ring identifier associated to the destination address and an output node identifier associated to the destination address.

Preferably, the physical selection table has a number of rows equal to the number of ring identifier-output node identifier combinations. Preferably, each row of the physical selection table comprises a ring identifier-output node identifier combination and a line card identifier associated to the combination. Therefore, accordingly, the physical selection table may be advantageously split in a number of sub-tables, each sub-table including rows having a same ring identifier. In other words, each sub-table correspond to a respective ring.

Preferably, when an error occurs in one of the rings, a signaling message indicative of the failure is generated, which comprises the ring identifier of the ring wherein the failure occurred.

Accordingly, when an interface node including a logic forwarding table and a physical selection table as explained above receives the signaling message, it advantageously recalculates only the sub-table corresponding to the ring wherein the failure occurred.

This advantageously allows to further reduce the duration of the rerouting operation, thus making even faster the client traffic restoration in case of failure.

## Claims

1. A network node (N11; N12) interfacing a client network generating a client traffic and a packet-switched network (PSN1; PSN2) supporting transmission of said client traffic, said network node (N11; N12) comprising a client card (CC), a first line card (LC1) connected to said client card (CC) and a second line card (LC2) connected to said client car (CC), said client card (CC) comprising a forwarding module (FM) adapted to receive said client traffic and to forward a packet (p; p1, p2, p3) transporting a portion of said client traffic and having a destination address (MAC1, ..., MACk; MACO, ... MACn-1, MACn, ... MACn+m-1, MACn+m, ... MACn+m+q-1) to one of said first line card (LC1) and said second line card (LC2), said network node (N11; N12) being **characterized in that** said client card (CC) further comprises:
- a logical forwarding table (LFT; LFT') associating the destination address (MAC1,..., MACk; MACO, ... MACn-1, MACn, ... MACn+m-1, MACn+m, ... MACn+m+q-1) to a logical output identifier (LLid);
- a physical selection table (PST; PST') associating said logical output identifier (LLid) to a line card identifier, said line card identifier being equal to one of a first identifier (LC1id) of said first line card (LC1) and a second identifier (LCid2) of said second line card (LC2), according to a failure condition of said packet-switched network (PSN1; PSN2); and **in that**
- said forwarding module (FM) is adapted to use said destination address (MAC1, ... , MACk; MACO, ... MACn-1, MACn, ... MACn+m-1, MACn+m, ... MACn+m+q-1) as a first search key in said logical forwarding table (LFT; LFT') for retrieving said logical output identifier (LLid), to use said logical output identifier (LLid) as a second search key in said physical selection table (PST; PST') for retrieving said line card identifier and to forward said packet (p; p1, p2, p3) to one of said first line card (LC1) and said second line card (LC2) which is identified by said line card identifier.

2. The network node (N12) according to claim 1, wherein said logical forwarding table (LFT') associates said destination address (MAC0, ... MACn-1, MACn, ... MACn+m-1, MACn+m, ... MACn+m+q-1) to a combination of said logical output identifier (LLid) and an output interface identifier (N22id, N32id, N42id), said output interface identifier (N22id, N32id, N42id) identifying a further node (N22, N32, N42) connecting said packet-switched network (PSN2) and a further client network to which packets with said destination address (MAC0, ... MACn-1, MACn, ... MACn+m-1, MACn+m, ... MACn+m+q-1) have to be transmitted.

3. The network node (N12) according to claim 2, wherein said physical selection table (PST') associates said combination to said line card identifier.

4. The network node (N11, N12) according to any of the preceding claims, wherein at least one of said first line card (LC1) and said second line card (LC2) comprises a client traffic protection module (PM1, PM2) configured to receive a signaling message indicative of a failure from a still further network node of said packet-switched network (PSN1; PSN2), and to set said line card identifier according to a content of said signaling message.

5. A method for forwarding traffic generated by a client network through a packet-switched network (PSN1; PSN2), said method comprising, at a network node (N 11; N12) interfacing said client network and said packet-switched network (PSN1; PSN2), receiving said client traffic and forwarding a packet (p; p1, p2, p3) transporting a portion of said client traffic and having said destination address (MAC1, ..., MACk; MAC0, ... MACn-1, MACn, ... MACn+m-1, MACn+m, ... MACn+m+q-1) to one of a first line card (LC1) and a second line card (LC2) of said network node (N11; N12), **characterized in that** it further comprising, before said forwarding,
a) using said destination address (MAC1, ..., MACk; MAC0, ... MACn-1, MACn, ... MACn+m-1, MACn+m, ... MACn+m+q-1) as a first search key for retrieving a logical output identifier (LLid) in a logical forwarding table (LFT; LFT');
b) using said logical output identifier (LLid) as a second search key for retrieving a line card identifier in a physical selection table (PST; PST'), said line card identifier being equal to one of a first identifier (LC1id) of said first line card (LC1) and a second identifier (LCid2) of said second line card (LC2), according to a failure condition of said packet-switched network (PSN1; PSN2); and **in that** said forwarding comprises
c) forwarding said packet (p; p1, p2, p3) to one of said first line card (LC1) and said second line card (LC2) which is identified by said line card identifier.

6. The method according to claim 5, wherein said step a) comprises associating, in said logical forwarding table (LFT'), said destination address (MACO, ... MACn-1, MACn, ... MACn+m-1, MACn+m, ... MACn+m+q-1) to a combination of said logical output identifier (LLid) and an output interface identifier (N22id, N32id, N42id), said output interface identifier (N22id, N32id, N42id) identifying a further node (N22, N32, N42) connecting said packet-switched network (PSN2) and a further client network to which packets with said destination address (MACO, ... MACn-1, MACn, ... MACn+m-1, MACn+m, ... MACn+m+q-1) have to be transmitted.

7. The method according to claim 6, wherein said step b) further comprises associating, in said physical selection table (PST'), said combination to said line card identifier.

8. The method according to any of claims 5 to 7, wherein it further comprises, at one of said first line card (LC1) and said second line card (LC2):
d) receiving a signaling message indicative of a failure from a still further network node of said packet-switched network (PSN1; PSN2), and
e) setting said line card identifier according to a content of said signaling message.

## Patentansprüche

1. Ein Netzwerkknoten (N11; N12) zum Verknüpfen eines einen Client-Verkehr erzeugenden Client-Netzwerks mit einem paketvermittelten Netzwerk (PSN1; PSN2), welches die Übertragung des besagten Client-Verkehrs unterstützt, wobei der besagte Netzwerkknoten (N11; N12) eine Client-Karte (CC), eine erste Anschlusskarte (LC1), welche an die besagte Client-Karte (CC) angeschlossen ist, und eine zweite Anschlusskarte (LC2), welche an die besagte Client-Karte (CC) angeschlossen ist, umfasst, wobei die besagte Client-Karte (CC) ein Weiterleitungsmodul (FM) umfasst, welches dazu ausgelegt ist, den besagten Client-Verkehr zu empfangen und ein Paket (p; p1, p2, p3), welches einen Teil des besagten Client-Verkehrs transportiert und eine Zieladresse (MAC1, ..., MACk; MAC0, ... MACn-1, MACn, ... MACn+m-1, MACn+m, ... MACn+m+q-1) hat, an entweder die besagte erste Anschlusskarte (LC1) oder die besagte zweite Anschlusskarte (LC2) weiterzuleiten, wobei der besagte Netzwerkknoten (N11; N12) **dadurch gekennzeichnet ist, dass** die besagte Client-Karte (CC) weiterhin umfasst:
- Eine logische Weiterleitungstabelle (LFT; LFT'), welche die Zieladresse (MAC1, .., MACk; MAC0, ... MACn-1, MACn, ... MACn+m-1, MACn+m, ... MACn+m+q-1) einer logischen Ausgangskennung (LLid) zuordnet;
- eine physische Auswahltabelle (PST; PST'), welche die besagte logische Ausgangskennung (LLid) einer Anschlusskartenkennung zuordnet, wobei die besagte Anschlusskartenkennung entweder einer ersten Kennung(LC1id) der besagten ersten Anschlusskarte (LC1) oder einer zweiten Kennung (LLid2) der besagten zweiten Anschlusskarte (LC2) entspricht, gemäß einem Fehlerzustand des besagten paketvermittelten Netzwerks (PSN1; PSN2); und dass
- das besagte Weiterleitungsmodul (FM) dazu ausgelegt ist, die besagte Zieladresse (MAC1, ..., MACk; MAC0, ... MACn-1, MACn, ... MACn+m-1, MACn+m, ... MACn+m+q-1) als einen ersten Suchschlüssel in der besagten logischen Weiterleitungstabelle (LFT, LFT') zu verwenden, um die besagte logische Ausgangskennung (LLid) abzurufen, die besagte logische Ausgangskennung (LLid) als einen zweiten Suchschlüssel in der besagten physischen Auswahltabelle (PST; PST') zu verwenden, um die besagte Anschlusskartenkennung abzurufen, und das besagte Paket (p, p1; p2; p3) an entweder die besagte erste Anschlusskarte (LC1) oder die besagte zweite Anschlusskarte (LC2), welche von der besagten Anschlusskartenkennung identifiziert wird, weiterzuleiten.

2. Der Netzwerkknoten (N12) nach Anspruch 1, wobei die besagte logische Weiterleitungstabelle (LFT') die besagte Zieladresse (MAC0, ... MACn-1, MACn, ... MACn+m-1, MACn+m, ... MACn+m+q-1) einer Kombination der besagten logischen Ausgangskennung (LLid) und einer Ausgangsschnittstellenkennung (N22id, N32id, N42id) zuordnet, wobei die besagte Ausgangsschnittstellenkennung (N22id, N32id, N42id) einen weiteren Knoten (N22, N32, N42) identifiziert, welcher das besagte paketvermittelte Netzwerk (PSN2) und ein weiteres Client-Netzwerk, an welches Pakete mit der besagten Zieladresse (MAC0, ... MACn-1, MACn, ... MACn+m-1, MACn+m, ... MACn+m+q-1) zu senden sind, verbindet.

3. Der Netzwerkknoten (N12) nach Anspruch 2, wobei die besagte physische Auswahltabelle (PST') die besagte Kombination der besagten Anschlusskartenkennung zuordnet.

4. Der Netzwerkknoten (N11, N12) nach einem beliebigen der vorstehenden Ansprüche, wobei zumindest entweder die besagte erste Anschlusskarte (LC1) oder die besagte zweite Anschlusskarte (LC2) ein Client-Verkehrsschutzmodul (PM1, PM2) umfasst, welches für den Empfang einer Signalisierungsnachricht, die einen Fehler meldet, von einem noch weiteren Netzwerkknoten des besagten paketvermittelten Netzwerks (PSN1; PSN2) und für das Einstellen der besagten Anschlusskartenkennung gemäß einem Inhalt der besagten Signalisierungsnachricht konfiguriert ist.

5. Ein Verfahren zum Weiterleiten eines von einem Client-Netzwerk erzeugten Verkehrs über ein paketvermitteltes Netzwerk (PSN1; PSN2), wobei das Verfahren das Empfangen des besagten Client-Verkehrs an einem Netzwerkknoten (N11; N12), welcher das besagte Client-Netzwerk mit dem besagten paketvermittelten Netzwerk (PSN1; PSN2) verknüpft, und das Weiterleiten eines Pakets (p; p1, p2, p3), welches einen Teil des besagten Client-Verkehrs transportiert und die besagte Zieladresse (MAC1, ..., MACk; MAC0, ... MACn-1, MACn, ... MACn+m-1, MACn+m, ... MACn+m+q-1) hat, an entweder die erste Anschlusskarte (LC1) oder eine zweite Anschlusskarte (LC2) des besagten Netzwerkknotens (N11; N12) umfasst, **dadurch gekennzeichnet, dass** es weiterhin, vor dem besagten Weiterleiten, umfasst:
a) Verwenden der besagten Zieladresse (MAC1, ..., MACk; MAC0, ... MACn-1, MACn, ... MACn+m-1, MACn+m, ... MACn+m+q-1) als einen ersten Suchschlüssel zum Abrufen einer logischen Ausgangskennung (LLid) in einer logischen Weiterleitungstabelle (LFT; LFT');
b) Verwenden der besagten logischen Ausgangskennung (LLid) als einen zweiten Suchschlüssel zum Abrufen einer Anschlusskartenkennung in einer physischen Auswahltabelle (PST; PST'), wobei die besagte Anschlusskartenkennung entweder einer ersten Kennung (LC1id) der besagten ersten Anschlusskarte (LC1) oder einer zweiten Kennung (LC2id) der besagten zweiten Anschlusskarte (LC2) entspricht, gemäß einem Fehlerzustand des besagten paketvermittelten Netzwerks (PSN1; PSN2); und dass das besagte Weiterleiten umfasst:
c) Weiterleiten des besagten Pakets (p; p1, p2, p3) an entweder die besagte erste Anschlusskarte (LC1) oder die besagte zweite Anschlusskarte (LC2), welche von der besagten Anschlusskartenkennung identifiziert wird.

6. Das Verfahren nach Anspruch 5, wobei der besagte Schritt a) das Zuordnen, in der besagten logischen Weiterleitungstabelle (LFT'), der besagten Zieladresse (MAC0, ... MACn-1, MACn, ... MACn+m-1, MACn+m, ... MACn+m+q-1) zu einer Kombination der besagten logischen Ausgangskennung (LLid) und einer Ausgangsschnittstellenkennung (N22id, N32id, N42id) umfasst, wobei die besagte Ausgangsschnittstellenkennung (N22id, N32id, N42id) einen weiteren Knoten (N22, N32, N42) identifiziert, welcher das besagte paketvermittelte Netzwerk (PSN2) mit einem weiteren Client-Netzwerk, an welches Pakete mit der besagten Zieladresse (MAC0, ... MACn-1, MACn, ... MACn+m-1, MACn+m, ... MACn+m+q-1) zu senden sind, verbindet.

7. Das Verfahren nach Anspruch 6, wobei der besagte Schritt b) weiterhin das Zuordnen, in der besagten physischen Auswahltabelle (PST'), der besagten Kombination zu der besagten Anschlusskartenkennung umfasst.

8. Das Verfahren nach einem beliebigen der Ansprüche 5 bis 7, weiterhin umfassend, an entweder der besagten ersten Anschlusskarte (LC1) oder der besagten zweiten Anschlusskarte (LC2):
d) Empfangen einer Signalisierungsnachricht, welche einen Fehler meldet, von einem noch weiteren Netzwerkknoten des besagten paketvermittelten Netzwerks (PSN1; PSN2), und
e) Einstellen der besagten Anschlusskartenkennung gemäß einem Inhalt der besagten Signalisierungsnachricht.

## Revendications

1. Noeud de réseau (N11 ; N12) qui réalise l'interface entre un réseau client générant un trafic client et un réseau à commutation de paquets (PSN1 ; PSN2) qui prend en charge la transmission dudit trafic client, ledit noeud de réseau (N11 ; N12) comprenant une carte de client (CC), une première carte de ligne (LC1) connectée à ladite carte de client (CC) et une deuxième carte de ligne (LC2) connectée à ladite carte de client (CC), ladite carte de client (CC) comprenant un module de renvoi (FM) adapté pour recevoir ledit trafic client et pour renvoyer un paquet (p ; p1, p2, p3) transportant une portion dudit trafic client et ayant une adresse de destination (MAC1, .. , MACk; MACO, ... MACn-1, MACn, ... MACn+m-1, MACn+m, ... MACn+m+q-1) vers l'une parmi ladite première carte de ligne (LC1) et ladite deuxième carte de ligne (LC2), ledit noeud de réseau (N11; N12) étant **caractérisé en ce que** ladite carte de client (CC) comprend en outre :
- une table de renvoi logique (LFT ; LFT') qui associe l'adresse de destination (MAC1, ..., MACk ; MACO, ... MACn-1, MACn, ... MACn+m-1, MACn+m, ... MACn+m+q-1) à un identifiant de sortie logique (LLid) ;
- une table de sélection physique (PST ; PST') qui associe ledit identifiant de sortie logique (LLid) à un identifiant de carte de ligne, ledit identifiant de carte de ligne étant soit un premier identifiant (LC1id) de ladite première carte de ligne (LC1), soit un deuxième identifiant (LC2id) de ladite deuxième carte de ligne (LC2), en fonction d'une condition de défaillance dudit réseau à commutation de paquets (PSN1 ; PSN2) ; et **en ce que**
- ledit module de renvoi (FM) est adapté pour utiliser ladite adresse de destination (MAC1, ..., MACk ; MACO, ... MACn-1, MACn, ... MACn+m-1, MACn+m, ... MACn+m+q-1) en tant que première clé de recherche dans ladite table de renvoi logique (LFT, LFT') pour retrouver ledit identifiant de sortie logique (LLid), pour utiliser ledit identifiant de sortie logique (LLid) en tant que deuxième clé de recherche dans ladite table de sélection physique (PST ; PST') pour retrouver ledit identifiant de carte de ligne et pour renvoyer ledit paquet (p ; p1, p2, p3) à ladite première carte de ligne (LC1) ou à ladite deuxième carte de ligne (LC2) qui est identifiée par ledit identifiant de carte de ligne.

2. Noeud de réseau (N12) selon la revendication 1, ladite table de renvoi logique (LFT') associant ladite adresse de destination (MACO, ... MACn-1, MACn, ... MACn+m-1, MACn+m, ... MACn+m+q-1) à une combinaison dudit identifiant de sortie logique (LLid) et un identifiant d'interface de sortie (N22id, N32id, N42id), ledit identifiant d'interface de sortie (N22id, N32id, N42id) identifiant un noeud supplémentaire (N22, N32, N42) qui connecte ledit réseau à commutation de paquets (PSN2) et un autre réseau client vers lesquels doivent être transmis les paquets ayant ladite adresse de destination (MACO.... MACn-1, MACn,... MACn+m-1, MAGn+m, ... MACn+m+q-1).

3. Noeud de réseau (N12) selon la revendication 2, ladite table de sélection physique (PST') associant ladite combinaison audit identifiant de carte de ligne.

4. Noeud de réseau (N11, N12) selon l'une quelconque des revendications précédentes, au moins ladite première carte de ligne (LC1) ou ladite deuxième carte de ligne (LC2) comprenant un module de protection du trafic client (PM1, PM2) configuré pour recevoir un message de signalisation indiquant une défaillance d'encore un autre noeud de réseau dudit réseau à commutation de paquets (PSN1 ; PSN2) et pour définir ledit identifiant de carte de ligne en fonction d'un contenu dudit message de signalisation.

5. Procédé pour renvoyer le trafic généré par un réseau client à travers un réseau à commutation de paquets (PSN1 ; PSN2), ledit procédé comprenant, sur un noeud de réseau (N11 ; N12), la réalisation de l'interface entre ledit réseau client et ledit réseau à commutation de paquets (PSN1 ; PSN2), la réception dudit trafic client et le renvoi d'un paquet (p ; p1, p2, p3) transportant une portion dudit trafic client et ayant une adresse de destination (MAC1, ..., MACk ; MACO, ... MACn-1, MACn, ... MACn+m-1, MACn+m, ... MACn+m+q-1) vers l'une parmi une première carte de ligne (LC1) et une deuxième carte de ligne (LC2) dudit noeud de réseau (N11 ; N12), **caractérisé en ce qu'**il comprend en outre, avant ledit renvoi :
a) utilisation de ladite adresse de destination (MAC1, ..., MACk; MACO, ... MACn-1, MACn, ... MACn+m-1, MACn+m, ... MACn+m+q-1) en tant que première clé de recherche pour retrouver un identifiant de sortie logique (LLid) dans une table de renvoi logique (LFT ; LFT') ;
b) utilisation dudit identifiant de sortie logique (LLid) en tant que deuxième clé de recherche pour retrouver un identifiant de carte de ligne dans une table de sélection physique (PST ; PST'), ledit identifiant de carte de ligne étant soit un premier identifiant (LC1id) de ladite première carte de ligne (LC1), soit un deuxième identifiant (LC2id) de ladite deuxième carte de ligne (LC2), en fonction d'une condition de défaillance dudit réseau à commutation de paquets (PSN1 ; PSN2) ; et **en ce que** ledit renvoi comprend
c) renvoi dudit paquet (p ; p1, p2, p3) à ladite première carte de ligne (LC1) ou à ladite deuxième carte de ligne (LC2) qui est identifiée par ledit identifiant de carte de ligne.

6. Procédé selon la revendication 5, ladite étape a) comprenant l'association, dans ladite table de renvoi logique (LFT'), ladite adresse de destination (MACO, ... MACn-1, MACn, ... MACn+m-1, MACn+m, ... MACn+m+q-1) à une combinaison dudit identifiant de sortie logique (LLid) et un identifiant d'interface de sortie (N22id, N32id, N42id), ledit identifiant d'interface de sortie (N22id, N32id, N42id) identifiant un noeud supplémentaire (N22, N32, N42) qui connecte ledit réseau à commutation de paquets (PSN2) et un autre réseau client vers lesquels doivent être transmis les paquets ayant ladite adresse de destination (MACO, ... MACn-1, MACn, ... MACn+m-1, MACn+m, ... MACn+m+q-1).

7. Procédé selon la revendication 6, ladite étape b) comprenant en outre l'association, dans ladite table de sélection physique (PST'), de ladite combinaison audit identifiant de carte de ligne.

8. Procédé selon l'une quelconque des revendications 5 à 7, le procédé comprenant en outre, au niveau de ladite première carte de ligne (LC1) ou au niveau de ladite deuxième carte de ligne (LC2) :
d) réception d'un message de signalisation indiquant une défaillance d'encore un autre noeud de réseau dudit réseau à commutation de paquets (PSN1; PSN2), et
e) définition dudit identifiant de carte de ligne en fonction d'un contenu dudit message de signalisation.
